# DEMANDE DE BREVET EUROPEEN

(11) **EP 4 745 014 A1**
(43) Date de publication de la demande: **20.05.2026**
(21) Numéro de dépôt: 25215995.9
(22) Date de dépôt: 14.11.2025
(51) Int. Cl.: B62H 5/20, B62H 5/08, B62H 5/00, B62J 43/13, B62J 43/30, B62M 6/45, B62M 6/55, B62M 6/90

(54) **SYSTÈME DE CONTRÔLE D'UN VÉHICULE À PÉDALES**

(30) Priorité: 18.11.2024 FR 2412540
(71) Demandeur: Velco, 44300 Nantes (FR)
(72) Inventeur: Regnier, Pierre, 44800 Saint Herblain (FR); Smith, Johnny, 44300 Nantes (FR)
(74) Mandataire: Lequien, Philippe

(57) **Abrégé**

L'invention concerne un système de contrôle d'un véhicule à pédales (1), le système comprenant un véhicule à pédales (1) comprenant un pédalier (11), une connectique filaire d'échange de données intégrée dans le véhicule à pédales (1), le véhicule à pédales (1) comprenant également des organes communicants couplés les uns aux autres par l'intermédiaire de la connectique filaire d'échange de données, dont un moteur électrique (12) d'assistance électrique associé au pédalier (11), et un dispositif électronique (2) comprenant des moyens de télécommunication 25.

## Description

### Domaine Technique

Le domaine de l'invention est celui de la conception et de la fabrication d'équipements de véhicules à pédales disposant d'une assistance électrique.

L'invention concerne plus particulièrement un système de contrôle d'organes électroniques communicants d'un véhicule à pédales.

### État de la technique

Dans le domaine de l'invention, et plus spécifiquement des véhicules à pédales à assistance électrique, tel qu'un bicyclette électrique, il est connu des systèmes de contrôle mettant en œuvre un dispositif électronique monté à demeure au véhicule à pédales pour collecter des informations à propos du véhicule à pédales, contrôler des composants du véhicule à pédales, voire de proposer d'autres services, tels que par exemple pour permettre la géolocalisation du véhicule à pédales et l'émission d'un signal sonore en cas de suspicion de vol du véhicule à pédales, voire la désactivation à distance de l'assistance électrique du véhicule à pédales par l'utilisateur.

Ces dispositifs électroniques sont pourvus de moyens de géolocalisation, et d'antennes permettant au dispositif de communiquer avec un serveur informatique centralisant les données du véhicule à pédales, et hébergeant le compte d'un utilisateur auquel est associé le véhicule à pédales.

Un utilisateur peut basiquement accéder à son compte à l'aide de son ordiphone afin de gérer son véhicule à pédales.

Par exemple, un utilisateur peut déverrouiller son véhicule à pédales à l'aide d'une commande envoyée depuis son ordiphone, par l'intermédiaire du serveur, jusqu'au dispositif électronique lorsqu'il souhaite utiliser le véhicule à pédales, ou verrouiller son véhicule à pédales à l'aide d'une commande envoyée depuis son ordiphone, par l'intermédiaire du serveur, jusqu'au dispositif électronique, lorsqu'il vient de garer son véhicule à pédales et qu'il s'en éloigne.

À la suite du verrouillage du véhicule à pédales, ce dernier est protégé par le dispositif électronique qui permet de réaliser une géolocalisation du véhicule, voire d'émettre des alarmes sonores et logiciels si le véhicule venait à être déplacé en étant toujours verrouillé, ou encore des actions d'extinction du véhicule en cas de démarrage.

L'usage a démontré qu'une sécurisation plus avancée de l'intégration des composants électroniques de ces véhicules est nécessaire.

En effet, il a été constaté des vols de bicyclettes à assistance électrique par le biais d'une dégradation ou de l'arrachage du dispositif électronique monté sur la bicyclette, puis d'un redémarrage de composants électroniques du véhicule, sans le boîtier électronique, pour permettre au voleur de repartir avec la bicyclette en disposant d'une assistance électrique au pédalage.

Dans le domaine de l'invention, il est connu le document de brevet publié sous le numéro WO 2019/180641 A1 qui divulgue un système anti-vol pour véhicule électrique, dont notamment pour vélo à assistance électrique.

### Problème technique

L'invention a notamment pour objectif de pallier ces inconvénients de l'art antérieur.

Plus précisément, l'invention a pour objectif de proposer une solution qui vise à éviter ou limiter la possibilité de voler un véhicule à pédales à assistance électrique par le biais d'un arrachage du dispositif électronique.

L'invention a encore pour objectif de proposer une telle solution qui permette d'éviter le remplacement non légitime de composants clés du véhicule.

### Résumé de l'invention

Cet objectif, ainsi que d'autres qui apparaîtront par la suite, sont atteints grâce à l'invention qui a pour objet un système de contrôle d'un véhicule à pédales, le système comprenant un véhicule à pédales comprenant un pédalier, une connectique filaire d'échange de données intégrée dans le véhicule à pédales, le véhicule comprenant également des organes communicants couplés les uns aux autres par l'intermédiaire de la connectique filaire d'échange de données, dont :
- un moteur électrique d'assistance électrique associé au pédalier, le moteur électrique présentant un état opérationnel dans lequel il est susceptible de produire une assistance électrique au pédalage, et un état verrouillé dans lequel l'assistance électrique au pédalage est inactive ;
- un dispositif électronique comprenant des moyens de télécommunication, le dispositif électronique étant monté amovible sur le véhicule à pédales, le dispositif électronique présentant un état verrouillé et un état opérationnel dans lequel il est paramétré pour entraîner une bascule du moteur électrique entre son état opérationnel et son état verrouillé,

caractérisé en ce que chaque organe communicant comprend une mémoire programmée avec l'identifiant unique dudit organe communicant, et les identifiants uniques des autres organes communicants avec lequel il est couplé par l'intermédiaire de la connectique filaire d'échange de données,
et en ce qu'au moins le moteur électrique et le dispositif électronique sont chacun paramétrés pour :
   - envoyer périodiquement une interrogation de présence à l'autre du moteur électrique et du dispositif électronique, dit organe interrogé ;
   - envoyer une réponse à une interrogation de présence, la réponse intégrant l'identifiant unique de l'organe interrogé ;
   - se bloquer dans son état verrouillé en cas de non-réception d'une réponse intégrant l'identifiant unique de l'organe interrogé suite à l'envoi d'une interrogation de présence,
et en ce que chaque organe communicant comprend un algorithme de formulation d'une réponse spécifique,
et au moins le moteur électrique et le dispositif électronique sont chacun paramétrés pour :
   - joindre un défi à une interrogation de présence envoyée à un organe communicant ;
   - formuler une réponse spécifique au défi à l'aide de l'algorithme de formulation ;
   - joindre la réponse spécifique à la réponse intégrant son identifiant unique ;
   - se bloquer dans son état verrouillé en cas de non-réception d'une réponse intégrant l'identifiant unique de l'organe interrogé, et la réponse spécifique.

Le système de contrôle selon l'invention présente un fonctionnement améliorant la sécurité globale du système. En effet, le système de contrôle met en œuvre une « ligne de vie » entre au moins le dispositif électronique et le moteur électrique. Le dispositif électronique et le moteur électrique s'interrogent périodiquement mutuellement sur leur présence, et bascule dans un état verrouillé en cas de rupture de communication entre ces deux organes communicants.

Cette conception permet d'éviter que le véhicule à pédale ne puisse avoir son moteur électrique basculé dans son état opérationnel après un arrachement du dispositif électronique alors que le véhicule n'était pas utilisé, ou bien que le moteur électrique soit maintenu dans son état opérationnel si le dispositif électronique est arraché du véhicule alors que ce dernier est en cours d'utilisation.

Le lien établi passant par la connectique filaire d'échange de données, il n'est pas ou peu probable que des interrogations de présence ou réponse soient mal transmises, tel que cela est susceptible d'intervenir avec des transmissions radio.

L'envoi d'un défi et la vérification de la réponse spécifique permettent de renforcer grandement la sécurité du système de contrôle. En effet, dans ce cas les organes communicants qui comprennent l'algorithme de formulation d'une réponse spécifique sont des organes qui doivent être certifiés, et il est beaucoup plus compliqué de contrefaire ces organes communicants.

Selon un mode de réalisation préféré, le véhicule comprend une batterie électrique principale montée amovible sur le véhicule et couplée à la connectique filaire d'échange de données pour alimenter en électricité les organes communicants,
et le dispositif électronique intègre une batterie électrique secondaire, et est paramétré pour être alimenté électriquement prioritairement par la batterie électrique principale, et par sa batterie électrique secondaire en cas d'arrêt d'alimentation électrique depuis la batterie électrique principale.

De cette manière, le dispositif électronique reste toujours le dernier organe électronique alimenté en électricité en cas d'arrêt d'alimentation par la batterie électrique principale. Ceci permet de garantir le maintien opérationnel du dispositif électronique, au moins pour une durée limitée, après l'arrêt d'alimentation par la batterie électrique principale, par exemple pour conserver des fonctions de géolocalisation et d'alarme actives. De plus, en cas de retrait du dispositif électronique du véhicule, ce dernier reste alimenté en énergie grâce à sa batterie.

Selon une conception préférée, la batterie électrique principale fait partie des organes communicants,
et au moins le moteur électrique et le dispositif électronique, à leur passage à l'état opérationnel, sont chacun paramétrés pour :
- envoyer une interrogation de présence à la batterie électrique principale ;
- attendre une réponse intégrant l'identifiant unique de la batterie électrique principale ;
- se bloquer dans son état verrouillé en cas de non-réception d'une réponse intégrant l'identifiant unique de la batterie électrique principale.

Il peut ainsi être vérifié la légitimité de la batterie électrique principale afin d'éviter qu'une autre batterie électrique principale, par exemple volée sur un autre véhicule, puisse être utilisée dans le véhicule à pédales.

Avantageusement, le dispositif électronique comprend des moyens d'émission d'une alerte, et est paramétré pour émettre une alerte en cas de basculement dans son état verrouillé en cas de non-réception d'une réponse intégrant l'identifiant unique d'un organe interrogé.

La sécurité du système de contrôle est alors renforcée.

Une modification non légitime de composants du système de contrôle entraîne ainsi l'émission d'une alerte permettant à l'utilisateur légitime, ou un autre destinataire de l'alerte, d'en prendre connaissance immédiatement.

Selon une caractéristique avantageuse, le moteur électrique et le dispositif électronique, dans leur état opérationnel, sont chacun paramétrés pour envoyer périodiquement une interrogation de présence à l'autre du moteur électrique et du dispositif électronique, à une fréquence inférieure à 1 minute, préférentiellement inférieure à 10 secondes.

Avantageusement, le véhicule comprend au moins une roue motrice du véhicule destinée à être entraînée en rotation par le moteur électrique dans son état opérationnel,
et, dans l'état verrouillé du moteur électrique, la ou les roues motrices du véhicule ne sont pas bloquées.

Ceci permet d'éviter la survenue d'un accident lorsque quelqu'un utilise le véhicule à pédales, et que le moteur électrique passe dans son état verrouillé après ne pas avoir reçu une réponse d'un organe communiquant du véhicule.

Selon un mode de réalisation préféré, le système comprend un serveur distant apte à échanger des données avec le dispositif électronique par le biais des moyens de télécommunication du dispositif électronique,
le serveur distant comprenant des moyens d'appairage et/ou de dés-appairage d'organes communicants du véhicule, les moyens d'appairage et/ou de dés-appairage étant paramétrés pour envoyer au dispositif électronique des consignes d'appairage et/ou de dés-appairage intégrant des identifiants uniques à inscrire ou à supprimer des mémoires des organes communicants.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique d'un système de contrôle d'un véhicule à pédales selon l'invention ;
- la figure 2 est une représentation schématique du fonctionnement d'organes communicants du système de contrôle selon l'invention.

### Description détaillée

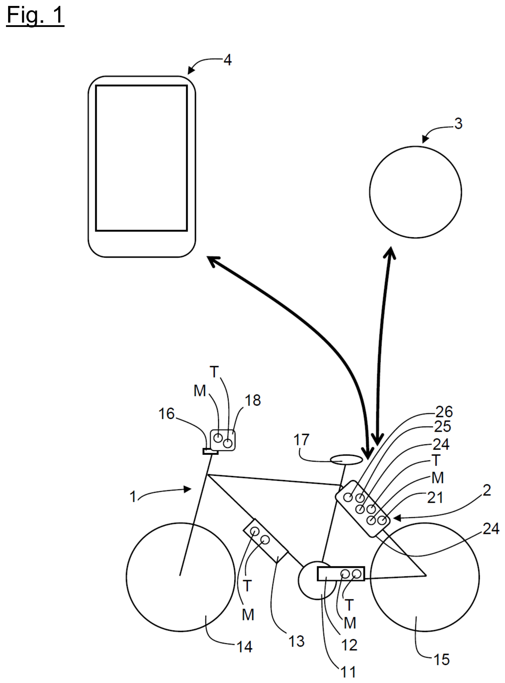

En référence à la figure 1, un système de contrôle d'un véhicule à pédales 1 est représenté.

Le véhicule à pédales 1 correspond préférentiellement à une bicyclette tel que cela est illustré sur la figure 1.

Alternativement, le véhicule à pédales 1 peut correspondre à un triporteur, ou à une rosalie.

Selon le présent mode de réalisation, le système comprend un véhicule à pédales 1, un dispositif électronique 2 monté sur le véhicule à pédales 1, un serveur distant 3, et un ordiphone 4.

Selon un mode de réalisation envisageable, le système pourrait ne pas comprendre de serveur distant 3, ni d'ordiphone 4.

Le véhicule à pédales 1 comprend :
- un pédalier 11 ;
- un moteur électrique 12 d'assistance électrique associé au pédalier 11 ;
- une batterie électrique principale 13 alimentant en électricité le moteur électrique 12, ainsi que d'autres composants électriques du véhicule à pédales 1 ;
- une roue directrice 14 avant;
- une roue motrice 15 arrière, couplée au pédalier 11 ainsi qu'au moteur électrique 12 pour être entraînée en rotation ;
- un guidon 16 ;
- une selle 17 ;
- une interface d'affichage et de contrôle 18, notamment fixée sur le guidon 16 ;
- une connectique filaire d'échange de données intégrée dans le véhicule à pédales 1.

Tel que cela apparaît par la suite, le véhicule à pédales comprend des composants électroniques nommés « organes communicants » qui peuvent s'échanger des données. Ces organes communicants comprennent notamment, de manière non limitative :
- le moteur électrique 12 ;
- le dispositif électronique 2 ;
- la batterie électrique principale 13 ;
- l'interface d'affichage et de contrôle 18.

Selon d'autres modes de réalisation envisageable, le véhicule à pédales 1 peut également comprendre, de manière non limitative : des phares, un dispositif d'antiblocage des roues, un radar de recul, des clignotants. Ces composants électroniques précités peuvent également faire partie des organes communicants.

Par l'expression associé au pédalier 11, il est entendu que le moteur électrique 12 est conçu pour fournir une assistance électrique au pédalage. Le moteur électrique 12 peut être couplé directement ou indirectement au pédalier 11. Il est envisageable par exemple que le moteur électrique 12 soit monté sur la roue arrière 15.

Dans un autre mode de réalisation envisageable, la roue avant 14 peut être motrice et le moteur électrique 12 serait monté sur cette roue avant, ou couplé indirectement à la roue avant 14 pour pouvoir l'entraîner en rotation.

Selon encore un autre mode de réalisation envisageable, le moteur électrique 12 est intégré à une remorque tractée par le véhicule à pédales 1, et l'assistance électrique au pédalage se traduit par un entraînement motorisé des roues de la remorque tractée, lors du pédalage de l'utilisateur du véhicule à pédales 1.

Le moteur électrique 12 présente un état opérationnel, ainsi qu'un état verrouillé.

Dans son état opérationnel, le moteur électrique 12 peut produire une assistance électrique au pédalage, par exemple en étant sollicité par l'utilisateur du véhicule à pédales 1 par le biais d'un pédalage et de la détection de ce pédalage par le moteur électrique 12, mais également, par exemple et de manière non limitative, par le biais d'un appui sur un commutateur positionné sur le guidon 16.

Dans son état verrouillé, l'assistance électrique au pédalage est inactive. Cette inactivation de l'assistance électrique au pédalage peut prendre plusieurs formes.

Par exemple, le moteur électrique 12 peut simplement s'arrêter, en laissant la capacité au pédalier d'entraîner en rotation la roue motrice. Selon un autre exemple, le moteur électrique 12 peut s'arrêter en débrayant la transmission entre le pédalier et la roue motrice, le pédalier tournant alors « dans le vide » et étant dans l'incapacité d'entraîner la roue motrice.

Tel que cela transparaît de ces exemples, dans l'état verrouillé du moteur électrique 12, la roue motrice 15 du véhicule à pédales 1 ne sont pas bloquées

D'autres formes d'inactivation du moteur électrique 12, impliquant le blocage de la roue motrice 15, sont toutefois envisageables.

Le dispositif électronique 2 est monté de manière amovible sur le véhicule à pédales 1. Ce dispositif électronique 2 peut par exemple être intégré dans le carter du moteur, dans un volume interne du cadre, ou encore dans un accessoire monté sur le véhicule à pédales 1. Il est envisageable que le dispositif électronique 2 soit simplement attaché sur l'extérieur du véhicule à pédales 1.

Le dispositif électronique 2 comprend :
- un boitier 24 hébergeant des composants électroniques du dispositif électronique 2 ;
- une antenne 21 de télécommunication bidirectionnelle à courte distance ;
- une mémoire M ;
- une unité de traitement électronique T ;
- une batterie électrique secondaire 24 ;
- des moyens de télécommunication 25, notamment de télécommunication bidirectionnelle à longue distance ;
- des moyens de géolocalisation 26, notamment une puce électronique de positionnement géographique par satellites.

Le dispositif électronique 2 comprend également des moyens d'émission d'une alerte.

Ces moyens d'émission d'une alerte peuvent par exemple comprendre un haut-parleur monté sur le dispositif électronique 2 pour diffuser un signal sonore à un niveau sonore particulièrement important.

Les moyens d'émission d'un alerte peuvent également, de manière complémentaire ou non du haut-parleur, prendre la forme d'une programmation spécifique intégrée dans la mémoire M du dispositif électronique 2 et qui vise à émettre un signal d'alerte intégrant la géolocalisation du dispositif électronique 2, obtenue par les moyens de géolocalisation, par le biais des moyens de télécommunication 25, à destination de l'ordiphone 4 et/ou du serveur distant 3.

La connectique filaire d'échange de données correspond à un bus de données CAN permettant de multiplexer les composants électroniques du véhicule à pédales 1 qui sont connectés sur ce bus de données.

Ce dispositif électronique 2 est couplé au moteur électrique 12, notamment par l'intermédiaire de la connectique filaire d'échange de données.

Le couplage du dispositif électronique 2 au moteur électrique 12 permet au dispositif électronique 2 de communiquer avec le moteur électrique 12. Par exemple, le dispositif électronique 2 peut collecter des informations techniques du moteur électrique 12 et envoyer des commandes au moteur électrique 12.

Tel que cela apparaît par la suite, le dispositif électronique 2 est paramétré pour entraîner une bascule du moteur électrique 12 entre son état opérationnel et son état verrouillé, et inversement.

Les paramétrages du dispositif électronique 2 sont mis en œuvre par son unité de traitement électronique T, et sa mémoire M.

Le dispositif électronique 2 est également couplé à la batterie électrique principale 13. Ce couplage permet au dispositif électronique 2 d'être alimenté en électricité par la batterie électrique principale 13. La batterie électrique secondaire 24 est conçue pour pallier une perte d'alimentation électrique depuis cette batterie électrique 13, et pour se recharger dès le rétablissement d'une alimentation électrique depuis cette batterie électrique 13.

En d'autres termes, le dispositif électronique 2 est paramétré pour être alimenté électriquement prioritairement par la batterie électrique principale 13, et par sa batterie électrique secondaire 24 en cas d'arrêt d'alimentation électrique depuis la batterie électrique principale 13.

Tel qu'évoqué précédemment, les organes communicants comprennent :
- le moteur électrique 12 ;
- le dispositif électronique 2 ;
- la batterie électrique principale 13 ;
- l'interface d'affichage et de contrôle 18.

Tel que cela est illustré sur la figure 1, chacun de ces organes communicants comprend une mémoire M.

De plus, chaque organe communicant comprend une unité de traitement électronique T.

Le moteur électrique 12 comprend une unité de traitement électronique T et une mémoire M.

La batterie électrique principale 13 comprend une unité de traitement électronique T et une mémoire M.

Enfin, l'interface d'affichage et de contrôle 18 comprend une unité de traitement électronique T et une mémoire M.

De manière similaire au dispositif électronique 2 décrit précédemment, les paramétrages respectifs des organes communicants sont mis en œuvre par leurs propres unités de traitement électronique, et mémoires M.

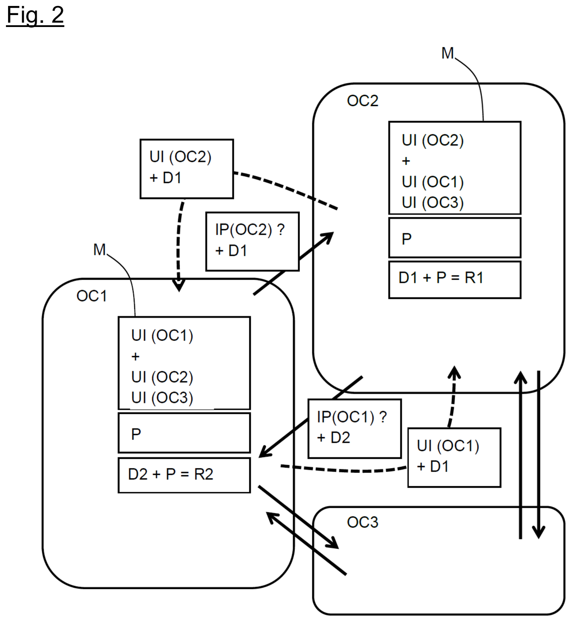

Tel que cela est illustré sur la figure 2, chaque organe communicant (OC1, OC2, OC3) comprend également un identifiant unique UI.

Cet identifiant unique UI peut par exemple correspondre à un numéro de série.

La mémoire M de chaque organe communicant (OC1, OC2, OC3) est ainsi programmée avec l'identifiant unique UI dudit organe communicant.

La mémoire M de chaque organe communicant est également programmée avec les identifiant unique UI des autres organes communicants avec lesquels il est connecté.

Par exemple, l'organe communicant OC1 comprend, dans sa mémoire M, l'identifiant unique UI de cet organe communicant OC1, mais également ceux des organes communicants OC1 et OC3.

Selon le présent mode de réalisation, le moteur électrique 12 (formant l'organe communicant OC1 sur la figure 2) et le dispositif électronique 2 (formant l'organe communicant OC2 sur la figure 2) sont chacun paramétrés pour :
- envoyer périodiquement une interrogation de présence IP à l'autre du moteur électrique 12 et du dispositif électronique 2, dit organe interrogé ;
- envoyer une réponse à une interrogation de présence IP, la réponse intégrant l'identifiant unique UI de l'organe interrogé ;
- se bloquer dans son état verrouillé en cas de non-réception d'une réponse intégrant l'identifiant unique UI de l'organe interrogé suite à l'envoi d'une interrogation de présence.

Ces organes communicants OC1 et OC2 établissent une communication mutuelle périodique et font ainsi partie d'un groupe principal d'organes communicants qui vérifient périodiquement leurs identités respectives.

Dans leur état opérationnel, le moteur électrique 12 (formant l'organe communicant OC1 sur la figure 2) et le dispositif électronique 2 (formant l'organe communicant OC2 sur la figure 2) sont plus précisément paramétrés pour envoyer l'interrogation de présence à l'autre du moteur électrique 12 et du dispositif électronique 2, à une fréquence inférieure à 1 minute, préférentiellement inférieure à 10 secondes, typiquement de l'ordre de 1 seconde.

Quant à lui, l'organe communicant OC3 ne fait pas partie du groupe principal d'organes communicants et son identité n'est pas vérifiée périodiquement, mais à la suite d'un événement prédéterminé.

Par exemple, l'identifiée unique UI de la batterie électrique principale 13 (formant l'organe communicant OC3), n'est vérifiée par le moteur électrique 12 et par le dispositif électronique 2 qu'à leurs passages respectifs à l'état opérationnel.

En effet, le moteur électrique 12 et le dispositif électronique 2, à leur passage à l'état opérationnel, sont chacun paramétrés pour :
- envoyer une interrogation de présence IP à la batterie électrique principale 13 ;
- attendre une réponse intégrant l'identifiant unique UI de la batterie électrique principale 13 ;
- se bloquer dans son état verrouillé en cas de non-réception d'une réponse intégrant l'identifiant unique UI de la batterie électrique principale 13.

Ce paramétrage relatif à une vérification d'identité, intervenant lors d'un passage à l'état opérationnel du dispositif électronique 2 et/ou du moteur électrique 12, est préférentiellement mis en œuvre pour les autres organes communicants décrits précédemment, tels que l'interface d'affichage et de contrôle 18, les phares, les clignotants, ...

Selon un exemple de mise en œuvre, le passage à l'état opérationnel du dispositif électronique 2 peut être réalisé à l'aide d'une commande envoyée à partir de l'ordiphone 4, et reçue par le dispositif électronique 2 à l'aide de ses moyens de télécommunication 25.

L'utilisateur du système, souhaitant utiliser son véhicule, peut utiliser son ordiphone 4 pour envoyer la commande de déverrouillage au dispositif électronique 2 du véhicule.

Le dispositif électronique 2 passe alors de son état verrouillé à son état opérationnel et peut alors vérifier les identités des autres organes communicants OC, de manière périodique ou unique tel que cela a été détaillé précédemment.

Si un remplacement, ou un retrait non légitime, de l'un des organes communicants OC a été réalisé, le dispositif électronique détecte alors la modification et se bloque alors dans son état verrouillé.

Dans l'hypothèse où toutes les identités sont concordantes, le dispositif électronique 2 envoie une consigne de mise en route au moteur électrique 12. Ce dernier passe alors à son état opérationnel et réalise également une vérification de l'identité des autres organes communicants OC.

De nouveau, si les identités vérifiées par le moteur électrique 12 sont concordantes, le moteur électrique 12 reste dans son état opérationnel et le véhicule peut être utilisé par son utilisateur.

Tel qu'évoqué précédemment, le dispositif électronique 2 comprend, selon le présent mode de réalisation, des moyens d'émission d'une alerte. Le dispositif 2 est alors également paramétré pour émettre une alerte en cas de basculement dans son état verrouillé en cas de non-réception d'une réponse intégrant l'identifiant unique UI d'un organe interrogé.

Dans l'hypothèse où le boîtier électronique 2 venait à être déconnecté, avec le moteur électrique 12 et le boîtier électronique 2 dans leur état opérationnel, alors le moteur électrique 12 ne recevrait plus de réponse à ses interrogations de présence périodiques et se bloquerait alors dans son état verrouillé. De plus, le boîter électrique 2 serait toujours alimenté grâce à la batterie électrique secondaire et, ne recevant plus de réponse à ses interrogations de présence périodiques, se bloquerait alors également dans son état verrouillé.

Toujours selon le présent mode de réalisation, chaque organe communicant OC comprend un algorithme de formulation P d'une réponse spécifique R1, R2.

Cet algorithme de formulation P permet à l'organe communicant de formuler une réponse spécifique R1, R2 à un défi D1, D2 donné.

L'organe communicant OC1, OC2 qui réalise une interrogation de présence IP doit alors joindre un défi D1, D2 à son interrogation, et, connaissant le défi D1, D2 envoyé et l'algorithme de formulation P, connaît également quelle réponse spécifique R1, R2 devra répondre l'organe communicant OC1, OC2 interrogé.

Selon le présent mode de réalisation, tous les organes communicants sont paramétrés pour :
- joindre un défi à une interrogation de présence envoyée à un organe communicant ;
- formuler une réponse spécifique au défi à l'aide de l'algorithme de formulation ;
- joindre la réponse spécifique à la réponse intégrant son identifiant unique ;
- se bloquer dans son état verrouillé en cas de non-réception d'une réponse intégrant l'identifiant unique de l'organe interrogé, et la réponse spécifique.

Selon un mode de réalisation envisageable, seuls le moteur électrique 12 et le dispositif électronique 2 sont paramétrés pour réaliser des interrogations de présence associées à des défis.

En référence à la figure 1 et tel qu'évoqué précédemment, le système comprend également un serveur distant 3.

Ce serveur distant 3 est apte à échanger des données avec le dispositif électronique 2 par le biais des moyens de télécommunication 25 du dispositif électronique 2.

Ce serveur distant 3 peut être utilisé pour consulter des informations techniques relatives au véhicule, et collectées par le dispositif électronique 2.

Le serveur distant 3 comprend également des moyens d'appairage et/ou de dés-appairage d'organes communicants du véhicule à pédales 1.

Ces moyens d'appairage et/ou de dés-appairage sont paramétrés pour envoyer au dispositif électronique 2 des consignes d'appairage et/ou de dés-appairage intégrant des identifiants uniques UI à inscrire ou à supprimer des mémoires M des organes communicants OC.

Par exemple, dans le cas où un organe communicant est défaillant, tel que la batterie électrique principale 13, alors un remplacement de la batterie électrique principale 13 par une autre nécessite une opération par le biais du serveur distant 3, pour autoriser et légitimer cette réparation.

Suite à une requête, par exemple émise par le biais d'un réparateur certifié, le serveur distant 3 envoie une consigne de dés-appairage pour supprimer l'identifiant unique UI de la batterie électrique principale 13 défectueuse, et envoie une consigne d'appairage qui contient l'identifiant unique UI de la batterie électrique principale 13 de remplacement qui sera ensuite dispatchée à l'ensemble des organes communicants.

La nouvelle batterie électrique principale 13 peut ensuite être montée sur le véhicule.

La nouvelle batterie électrique principale 13 doit bien entendu provenir d'un fabriquant lui-même certifié, disposant du bon algorithme de formulation P, de manière qu'il les intègre dans les mémoires M des batteries électriques principales 13 qu'il fabrique.

Le système décrit précédemment forme une solution qui permet d'éviter ou de limiter la possibilité de voler un véhicule à pédales à assistance électrique par le biais d'un arrachage du dispositif électronique. Une telle action entraîne un blocage dans l'état verrouillé des organes communicants, dont au moins le moteur électrique.

## Revendications

1. Système de contrôle d'un véhicule à pédales (1), le système comprenant un véhicule à pédales (1) comprenant un pédalier (11), une connectique filaire d'échange de données intégrée dans le véhicule à pédales (1), le véhicule à pédales (1) comprenant également des organes communicants couplés les uns aux autres par l'intermédiaire de la connectique filaire d'échange de données, dont :
- un moteur électrique (12) d'assistance électrique associé au pédalier (11), le moteur électrique (12) présentant un état opérationnel dans lequel il est susceptible de produire une assistance électrique au pédalage, et un état verrouillé dans lequel l'assistance électrique au pédalage est inactive ;
- un dispositif électronique (2) comprenant des moyens de télécommunication (25), le dispositif électronique (2) étant monté amovible sur le véhicule à pédales (1), le dispositif électronique (2) présentant un état verrouillé et un état opérationnel dans lequel il est paramétré pour entraîner une bascule du moteur électrique (12) entre son état opérationnel et son état verrouillé,
**caractérisé en ce que** chaque organe communicant comprend une mémoire (M) programmée avec l'identifiant unique (UI) dudit organe communicant, et les identifiants uniques (UI) des autres organes communicants avec lequel il est couplé par l'intermédiaire de la connectique filaire d'échange de données,
et **en ce qu'**au moins le moteur électrique (12) et le dispositif électronique (2) sont chacun paramétrés pour :
- envoyer périodiquement une interrogation de présence à l'autre du moteur électrique (12) et du dispositif électronique (2), dit organe interrogé ;
- envoyer une réponse à une interrogation de présence, la réponse intégrant l'identifiant unique (UI) de l'organe interrogé ;
- se bloquer dans son état verrouillé en cas de non-réception d'une réponse intégrant l'identifiant unique (UI) de l'organe interrogé suite à l'envoi d'une interrogation de présence,
et **en ce que** chaque organe communicant comprend un algorithme de formulation d'une réponse spécifique,
et **en ce qu'**au moins le moteur électrique (12) et le dispositif électronique (2) sont chacun paramétrés pour :
- joindre un défi à une interrogation de présence envoyée à un organe communicant ;
- formuler une réponse spécifique au défi à l'aide de l'algorithme de formulation ;
- joindre la réponse spécifique à la réponse intégrant son identifiant unique ;
- se bloquer dans son état verrouillé en cas de non-réception d'une réponse intégrant l'identifiant unique de l'organe interrogé, et la réponse spécifique.

2. Système selon la revendication précédente, **caractérisé en ce que** le véhicule à pédales (1) comprend une batterie électrique principale (13) montée amovible sur le véhicule à pédales (1) et couplée à la connectique filaire d'échange de données pour alimenter en électricité les organes communicants, et **en ce que** le dispositif électronique (2) intègre une batterie électrique secondaire (24), et est paramétré pour être alimenté électriquement prioritairement par la batterie électrique principale (13), et par sa batterie électrique secondaire (24) en cas d'arrêt d'alimentation électrique depuis la batterie électrique principale (13).

3. Système selon la revendication précédente, **caractérisé en ce que** la batterie électrique principale (13) fait partie des organes communicants, et **en ce qu'**au moins le moteur électrique (12) et le dispositif électronique (2), à leur passage à l'état opérationnel, sont chacun paramétrés pour :
- envoyer une interrogation de présence à la batterie électrique principale (13) ;
- attendre une réponse intégrant l'identifiant unique (UI) de la batterie électrique principale (13) ;
- se bloquer dans son état verrouillé en cas de non-réception d'une réponse intégrant l'identifiant unique (UI) de la batterie électrique principale (13).

4. Système selon l'une des revendications 2 et 3, **caractérisé en ce que** le dispositif électronique (2) comprend des moyens d'émission d'une alerte, et est paramétré pour émettre une alerte en cas de basculement dans son état verrouillé en cas de non-réception d'une réponse intégrant l'identifiant unique (UI) d'un organe interrogé.

5. Système selon l'une quelconque des revendications précédentes, **caractérisé en ce que** le moteur électrique (12) et le dispositif électronique (2), dans leur état opérationnel, sont chacun paramétrés pour envoyer périodiquement une interrogation de présence à l'autre du moteur électrique (12) et du dispositif électronique (2), à une fréquence inférieure à 1 minute, préférentiellement inférieure à 10 secondes.

6. Système selon l'une quelconque des revendications précédentes, **caractérisé en ce que** le véhicule à pédales (1) comprend au moins une roue motrice (15) du véhicule à pédales (1) destinée à être entraînée en rotation par le moteur électrique (12) dans son état opérationnel,
et **en ce que**, dans l'état verrouillé du moteur électrique (12), la ou les roues motrices (15) du véhicule à pédales (1) ne sont pas bloquées.

7. Système selon l'une quelconque des revendications précédentes, **caractérisé en ce qu'**il comprend un serveur distant (3) apte à échanger des données avec le dispositif électronique (2) par le biais des moyens de télécommunication (25) du dispositif électronique (2),
le serveur distant (3) comprenant des moyens d'appairage et/ou de dés-appairage d'organes communicants du véhicule à pédales (1), les moyens d'appairage et/ou de dés-appairage étant paramétrés pour envoyer au dispositif électronique (2) des consignes d'appairage et/ou de dés-appairage intégrant des identifiants uniques (UI) à inscrire ou à supprimer des mémoires des organes communicants.
